# EUROPÄISCHE PATENTANMELDUNG

(11) **EP 0 769 463 A1**
(43) Veröffentlichungstag der Anmeldung: **23.04.1997**
(21) Anmeldenummer: 96113298.2
(22) Anmeldetag: 20.08.1996
(51) Int. Cl.: B65G 69/28

(54) **Ausklappbare Verlängerung von Überfahrbrücken**

(30) Priorität: 04.10.1995 DE 29515757 U
(71) Anmelder: VAN WIJK NEDERLAND B.V., NL-8243 PJ Lelystad (NL)
(72) Erfinder: Van der Veen, Roelof, 8223 DS Lelystad (NL); Mögele, Reinhard, 8252 JV Dronten (NL)
(74) Vertreter: Beil, Hans Christoph, Dr.

(57) **Zusammenfassung**

Vorrichtung zum Ausschwenken der um ein waagerechtes Lippenscharnier ausschwenkbaren Verlängerung (2) von Überfahrbrücken mit einer an ihrem rampenseitigen Ende um eine Achse schwenkbaren Brückenplattform (1), bei der zwischen Brückenplattform und Verlängerung eine Gasdruckfeder (6) so angeordnet ist, daß sie bei eingeklappter Verlängerung diese in den Ruhezustand drückt und bei minimal ausgeklappter Verlängerung diese in ihre ausgeklappte End-Stellung dreht und dort hält

## Beschreibung

Die vorliegende Erfindung betrifft einen Ausklappmechanismus für die Verlängerung von mechanischen Überfahrbrücken.

Bei der Bedienung mechanischer Überfahrbrücken liegt folgende Situation vor: Die an ihrem rampenseitigen Ende um eine waagrechte Achse schwenkbare Brückenplattform wird durch geeignete federunterstützte Antriebe in die höchste Lage bewegt. Dort muß jetzt die Verlängerung ausgeklappt werden, um dieselbe auf eine Ladeplattform legen zu können. Hierbei ist wichtig, daß die Verlängerung so spät wie möglich und mit sehr geringem Kraftaufwand ausklappt, um auch Fahrzeuge deren Ladefläche höher als die Rampe ist, bedienen zu können.Die DE 4339921 zeigt ein Viergelenk zur Betätigung der Verlängerung. Die Herstellung ist aber sehr aufwendig. Die DE 3324005 zeigt eine Scheibe, die eine Art Übersetzung bildet, um Kraft und Anhebeweg möglichst zu beschränken. Beide Systeme müssen im ausgeklappten Stand verriegelt werden, um die Verlängerung in ausgeklappter Stellung zu halten.

Ziel der Erfindung ist es daher, die Verlängerung durch geringe Höhenveränderung der Brückenplattform auszuklappen und mit einfachen Mitteln im ausgeklappten Zustand zu halten und ferner diese Lösung kostengünstig zu bewerkstelligen.

Dieses Ziel wird dadurch erreicht, daß zwischen Brückenplattform und Verlängerung eine Gasdruckfeder so angeordnet ist, daß sie bei eingeklappter Verlängerung diese in den Ruhestand drückt, und bei minimal ausgeklappter Verlängerung diese in ihre ausgeklappte End-Stellung dreht und dort hält. Ein einfacher Hebelmechanismus dreht die Verlängerung gerade soweit, daß die Drehpunktsverlagerung für ein einklappendes oder ausklappendes Moment um den Drehpunkt zwischen Verlängerung und Ladebrückendeck sorgt.

Nachstehende Figuren erläutern die Erfindung.

Fig. 1 zeigt einen Längsschnitt durch den Vorderteil einer Überfahrbrücke mit eingeklappter Verlängerung.

Fig. 2 zeigt die Aufhängung der Gasdruckfeder an der Ladebrückenplattform.

Fig. 3 zeigt einen Längsschnitt durch den Vorderteil einer Überfahrbrücke mit leicht ausgeklappter Verlängerung.

Fig. 4 zeigt einen Längsschnitt durch den Vorderteil einer Überfahrbrücke mit weiter ausgeklappter Verlängerung.

Fig. 5 zeigt einen Längsschnitt durch den Vorderteil einer Überfahrbrücke mit ganz ausgeklappter Verlängerung.

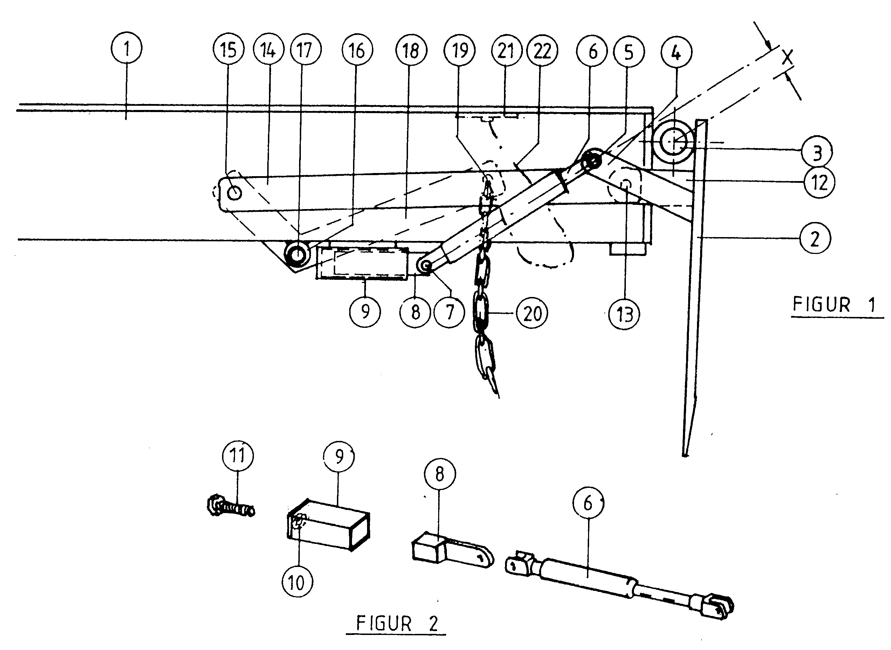

Fig. 1 zeigt die Brückenplattform (1) mit vertikal herabhängender Verlängerung (2), welche mittels eines Lippenscharniers (3) drehbar an der Brückenplattform (1) befestigt ist. Die Verlängerung (2) ist über einen Lippenausstoßer (4) im Lippenausstoßgelenk (5) mit einer Gasdruckfeder (6) und über das Gasdruckfedergelenk (7) mit dem Gasdruckfederlager (8) verbunden, welches in einem Stützrohr (9), das an der Brückenplattform (1) befestigt ist, gleitet. Zum Aus- und Einschwenken der Verlängerung (2) dient ein an dieser Verlängerung befestigter Lippenhebel (12), welcher über das Hebelgelenk (13) mit dem Anheber (14) verbunden ist, wobei dieser Anheber (14) seinerseits über das Kipparmgelenk (15) mit dem Kipphebel (18) verbunden ist, der mittels eines Dorns (17) in einem Auge (16) an der Brückenplattform (1) drehbar gelagert ist. Der Kipphebel (18) weist eine Bohrung (19) auf. In dieser Bohrung ist einerseits die Kette (20), welche mit dem nicht dargestellten Unterrahmen verbunden ist, und andererseits das Zugseil (22) befestigt, welches über eine Öffnung (21) zur Oberseite der Brückenplattform (1) geführt ist.

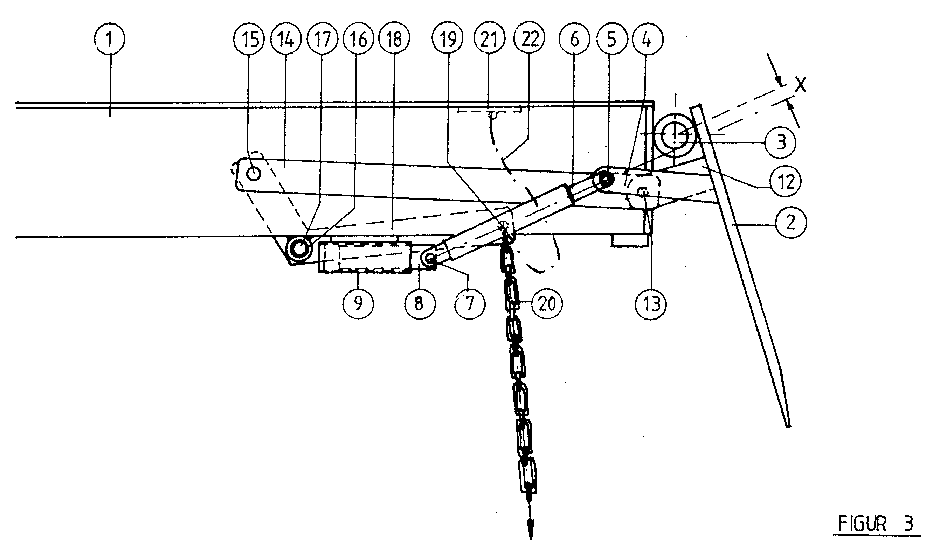

Fig. 2 zeigt die Gasdruckfeder (6) mit dem Gasdruckgegenlager (8) und das an der Brückplattform (1) befestigte Stützrohr (9). Dieses Stützrohr (9) weist an der Rückseite eine mit einem Gewinde versehene Bohrung (10) auf, in der eine Stellschraube (11) sitzt. Durch Drehen dieser Stellschraube (11) kann man das Gasdruckfederlager (8) in Richtung der Verlängerung (2) oder von dieser weg bewegen, um ein genaues Einstellen zu ermöglichen. Da das Gasdruckfederlager (8) im Stützrohr (9) gleitet, kann keine Zugkraft auf die Gasdruckfeder ausgeübt werden, was vor allem beim Ladevorgang von großer Wichtigkeit ist, wenn Durchbiegungen der Verlängerung (2) auftreten. Es versteht sich von selbst, daß die Stellschraube (11) gegen selbständiges Verdrehen gesichert ist.

Anhand der Zeichnungen wird die Funktion der Erfindung weiter wie folgt beschrieben:

Fig. 1 zeigt die Überfahrbrücke mit der ausklappbaren Verlängerung in der Ruhestellung. In dieser Stellung bildet die Gasdruckfeder (6) mit dem Hebelarm (x) ein Moment, das die Verlängerung in diese eingeklappte Stellung drückt und hält.

Wird nun die Brückenplattform (1) angehoben, zieht in der fast höchsten Stellung die entsprechend längendimensionierte Kette (20) den Arm des Kipphebels (18), an dem die Kette in der Bohrung (19) befestigt ist, von der Brückenplattform (1) weg nach unten, was eine Drehung dieses Kipphebels (18) um das Auge (16) zur Folge hat. Durch den Anheber (14) wird der Lippenhebel (12) damit von der Brückenplattform (1) weggedrückt, so daß die Verlängerung (2) ein wenig ausschwenkt. Fig. 3 zeigt diese Situation.

Aus Fig. 3 ist auch ersichtlich, daß durch die Drehung der Verlängerung (2) auch der Lippenausstoßer (4) um die Lippenachse (3) sich dreht und somit das Lippenausstoßgelenk (5) in eine Stellung kommt, in der die Gasdruckfeder (6) jetzt mit dem entstandenen Hebelarm (x) ein Moment bildet, das das Ausschwenken der Verlängerung bewirkt.

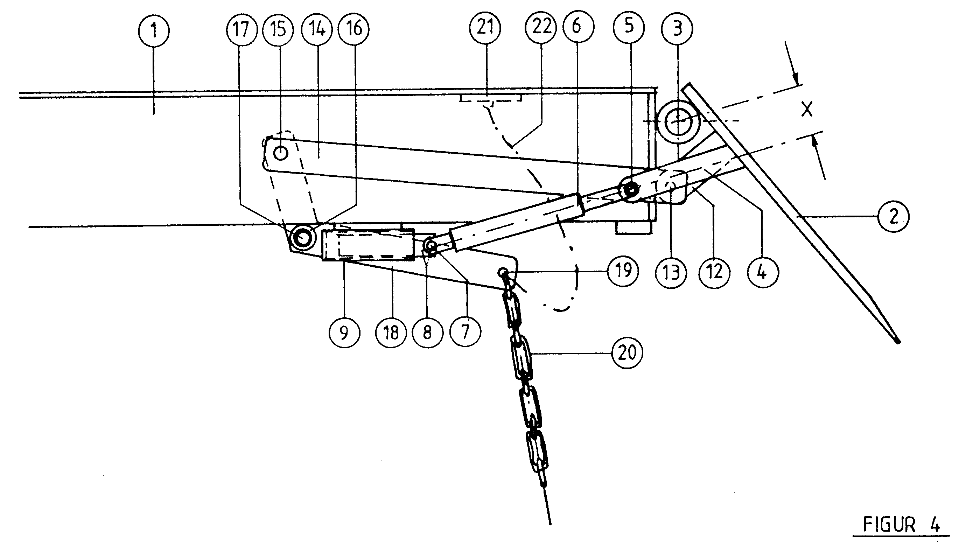

Fig. 4 zeigt, daß sich der Hebelarm (x) schnell vergrößert und das Ausklappmament damit schnell wächst, so daß die Verlängerung (2) schnell in die ausgeklappte Stellung gedreht und dort gehalten wird.

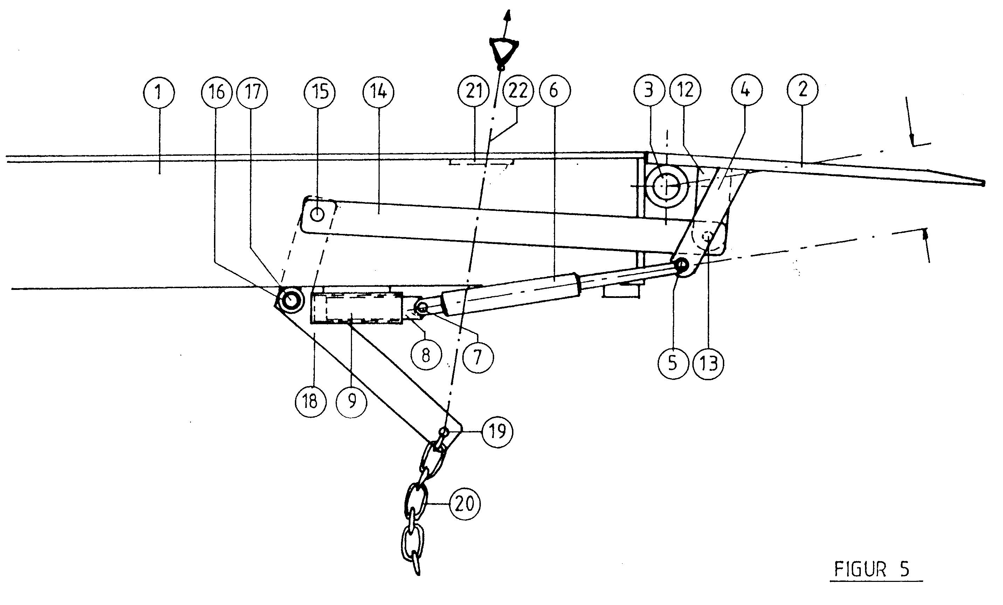

Fig. 5 zeigt die Verlängerung (2) in der vollständig ausgeklappten Stellung. Auch wenn die Brückenplattform (1) sich bis in ihre unterste Position senkt, bleibt diese ausgeklappte Stellung sicher ohne zusätzliche Maßnahmen erhalten, weil die Gasfeder (6) mit dem Hebelarm (x) für das ausdrückende Drehmoment sorgt.

Befindet sich die Brückenplattform 1 in ihrer untersten Ladestellung und fährt ein Fahrzeug unglücklicherweise gegen die ausgeklappte Verlängerung (2), so wird diese durch die der Gasdruckfeder (6) entgegenwirkende Anprallkraft wieder eingeklappt, so daß Beschädigungen ausgeschlossen sind.

Ist der Ladevorgang beendet, muß die Brückenplattform (1) wieder in ihre horizontale Stellung mit vertikal abgeklappter Verlängerung (2) gebracht werden. In dieser Stellung dient die Verlängerung (2) dann als Abstützung für den Ruhestand. Das Abklappen der Verlängerung (2) erfolgt dabei in der Weise, daß das in Fig. 5 gezeigte Zugseil (22) mit einem an ihrem Ende angebrachten Handgriff in Pfeilrichtung gezogen wird. Das die Bohrung (19) tragende Ende des Kipphebels (18) wird damit gegen die Brückenplattform (1) bewegt und der Anheber (14) zieht dadurch den Lippenhebel (12) in Richtung auf das hintere Ende der Brückenplattform (1). Dies hat das Verschwenken der Verlängerung (2) gegen das durch die Gasdruckfeder (6) und den Hebelarm (x) aufgebrachte Ausklappmoment zur Folge, das sich durch die Verkürzung des Abstandes (x) verkleinert, während die Verlängerung nach unten verschwenkt wird, bis sie wieder vertikal in der in Fig. 1 gezeigten Position steht, in der das durch die Gasdruckfeder (6) und den Hebelarm (x) erzeugte Moment die Verlängerung (2) in dieser vertikalen Stellung hält.

Es versteht sich von selbst, daß während des Einklappens der Verlängerung (2) gleichzeitig auch die Brückenplattform (1) hochgehoben werden kann, und daß beim Loslassen des Zugseils (22) die Brückenplattform (1) sich unterstützt durch die Verlängerung (2) in vertikaler Stellung gesichert in der sogenannten Querverkehrsstellung befindet.

Insgesamt stellt die Erfindung eine einfache und sichere Lösung des gestellten Problems dar.

## Patentansprüche

1. Vorrichtung zum Ausschwenken der um ein waagrechtes Lippenscharnier (3) ausschwenkbaren Verlängerung (2) von Überfahrbrücken mit einer an ihrem rampenseitigen Ende um eine Achse schwenkbaren Brückenplattform (1), dadurch gekennzeichnet, daß eine an der Brückenplattform (1) um eine Achse (7) schwenkbar gelagerte Gasdruckfeder (6) über einen an ihr angelenkten Lippenausstoßer (4) so mit der Verlängerung (2) verbunden ist, daß bei vertikal stehender Verlängerung (2) die Längsachse der Gasdruckfeder (6) oberhalb der Drehachse des Lippenscharniers (3) und beim Verdrehen der Verlängerung unterhalb dieser Drehachse liegt und daß ein an der Brückenplattform (1) gelagerter Hebelmechanismus (12, 14, 18) an der Verlängerung (2) angreift.

2. Vorrichtung nach Anspruch 1 dadurch gekennzeichnet, daß der Hebelmechanismus aus einem an der Brückenplattform (1) mittels Auge (16) und Dorn (17) gelagerten Kipphebel (18), dem gelenkig mit ihm und dem an der Verlängerung (2) befestigten Lippenhebel (12) verbundenen Anheber (14), einer in der Bohrung (19) des Kipphebels (18) befestigten Kette (20), deren anderes Ende in geeigneter Weise so befestigt ist, daß sie beim Anheben der Brückenplattform in einer definierten Stellung den Kipphebel (18) nach unten zieht, sowie einem ebenfalls in der Bohrung (19) befestigten Zugseil (22), das durch eine Öffnung (21) in der Brückenplattform nach oben geführt ist, besteht.

3. Vorrichtung nach Anspruch 1 oder 2 dadurch gekennzeichnet, daß die Gasdruckfeder (6) über ein in einem Stützrohr (9) gleitendes Gasfederlager (8) mit der Brückenplattform (1) verbunden ist.

4. Vorrichtung nach einem der Ansprüche 1 bis 3 dadurch gekennzeichnet, daß das Stützrohr (9) an der Verlängerung (2) abgekehrten Seite eine Bohrung mit Gewinde (10) aufweist, in die eine Stellschraube (11) greift.

5. Vorrichtung nach einem der Ansprüche 1 bis 4 dadurch gekennzeichnet, daß anstelle der Gasfeder (6) ein anderes Druckelement, wie z.B. eine Druckfeder, benutzt wird.
